# EUROPÄISCHE PATENTSCHRIFT

(11) **EP 2 655 879 B1**
(45) Veröffentlichungstag und Bekanntmachung des Hinweises auf die Patenterteilung: **09.12.2015**
(21) Anmeldenummer: 11797243.0
(22) Anmeldetag: 15.12.2011
(51) Int. Cl.: F03D 11/00, F16C 19/38, F16C 33/60, F16C 17/00, F16C 32/06, F16C 33/58, F16H 1/22

(54) **WINDKRAFTANLAGE**
WIND POWER PLANT
ÉOLIENNE

(30) Priorität: 21.12.2010 DE 102010063687
(43) Veröffentlichungstag der Anmeldung: 30.10.2013
(73) Patentinhaber: Aktiebolaget SKF, 415 50 Göteborg (SE)
(72) Erfinder: DERRER, Siegfried, 91315 Höchstadt (DE); PICKEL, Edgar, 97334 Sommerach (DE)
(74) Vertreter: Schonecke, Mitja
(86) Internationale Anmeldenummer: PCT/EP2011/072838
(87) Internationale Veröffentlichungsnummer: WO 2012/084665

(56) Entgegenhaltungen:
- EP-A1- 1 677 005
- DE-A1- 10 351 524
- DE-A1-102007 008 758
- DE-A1-102007 041 508
- DE-A1-102007 042 770

## Beschreibung

Die Erfindung betrifft eine Windkraftanlage, umfassend ein Gehäuse, einen Rotor und mindestens einen eine Generatorwelle aufweisenden Generator, wobei der Rotor relativ zu dem Gehäuse in einer mindestens zwei Lagerringe aufweisenden Lageranordnung gelagert ist und wobei zwischen dem Rotor und dem Generator ein Antriebsstrang angeordnet ist, um die Drehung des Rotors auf die mindestens eine Generatorwelle zu übertragen, wobei der Antriebsstrang den mindestens einen Lagerinnenring der Lageranordnung umfasst, wobei der Rotor an einer Stirnseite des Lagerinnenrings angeflanscht und so mit dem Lagerinnenring drehfest verbunden ist, wobei der Lagerinnenring mit einer am Innenumfang des Lagerinnenrings (d. h. an einer zylindrischen Innenfläche des Lagerinnenrings) angeordneten Verzahnung versehen ist, wobei der Antriebsstrang weiterhin mindestens ein Ritzel umfasst, das mit der Verzahnung des Lagerinnenrings in Eingriff steht, wobei das Ritzel direkt oder über ein Getriebe mit der Generatorwelle verbunden ist und wobei das Ritzel radial innerhalb des Lagerinnenrings angeordnet ist und wobei die Verzahnung und das Ritzel eine Stirnverzahnung bilden (d. h. die Achsen der miteinander kämmenden Zahnräder sind parallel zueinander angeordnet).

Windkraftanlagen dieser Art sind im Stand der Technik hinlänglich bekannt. Eine Anlage der gattungsgemäßen Art zeigt die DE 10 2007 041 508 A1. Ähnliche Lösung zeigen die DE 10 2007 008 758 A1, die DE 10 2006 057 055 B3, die DE 103 51 524 A1, die DE 10 2007 042 770 A1, die EP 1 677 005 A1 und die DE 103 51 524 A1. Der Rotor der Anlage wird in einem Großlager gelagert, wobei häufig eine zweireihige Kegelrollenlageranordnung zum Einsatz kommt. Der so gelagerte Rotor ist häufig über ein Getriebe mit der Generatorwelle gekoppelt, so dass seine Drehung auf die Generatorwelle übertragen wird. So kann elektrische Energie gewonnen werden.

Nachteilig ist bei den vorbekannten Lösungen, dass die Anlage aufgrund ihrer Dimensionen sehr groß und teuer ist. Dies gilt insbesondere für den Generator. Weiterhin bedeutet es bei der vorbekannten Konzeption, dass im Falle dessen, dass der Generator wartungs- bzw. reparaturbedingt ausfällt, die gesamte Anlage angehalten werden muss und bis zum Abschluss der Wartung- bzw. Reparaturarbeiten keine Energie erzeugt werden kann.

Der Erfindung liegt daher die Aufgabe zu Grunde, eine Windkraftanlage der gattungsgemäßen Art so fortzubilden, dass ein einfacheres, kostengünstigeres und flexibleres Konzept gegeben ist. Die Verfügbarkeit der Anlage soll damit erhöht werden.

Die Lösung dieser Aufgabe durch die Erfindung ist dadurch gekennzeichnet, dass das Ritzel samt Generatorwelle, gegebenenfalls vorhandenem Getriebe und Generator exzentrisch zur Drehachse des Rotors angeordnet sind.

Der Antriebsstrang weist bevorzugt mindestens zwei Ritzel auf, die jeweils mit der Verzahnung in Eingriff stehen, wobei jedes Ritzel direkt oder über ein Getriebe mit einer Generatorwelle eines Generators verbunden ist.

Der Antriebsstrang hat gemäß einer besonders bevorzugten Ausgestaltung mindestens 3 bis 6 Ritzel, die jeweils mit der Verzahnung in Eingriff stehen, wobei jedes Ritzel direkt oder über ein Getriebe mit einer Generatorwelle eines Generators verbunden ist und wobei die Ritzel bevorzugt gleichmäßig um den Umfang des Innenrings verteilt angeordnet sind.

Das Ritzel samt direkter oder indirekter Verbindung zur Generatorwelle und der Generator sind dabei bevorzugt als auswechselbare Einheit ausgebildet.

Dies eröffnet die Möglichkeit, dass eine Anzahl kleinerer Generatoren, und nicht mehr wie im Stand der Technik ein einziger großer Generator, zum Einsatz kommt, wobei jeder Generator samt Anbindung über das Ritzel ein Modul (eine Einheit) darstellt, die bei Bedarf in oder außer Eingriff mit dem verzahnten Lagerring gebracht werden kann. Dies bietet insbesondere die Möglichkeit, beim Ausfall eines Generators die Windkraftanlage weiterlaufen zu lassen und lediglich den ausgefallenen Generator zu ersetzen.

Die Lageranordnung ist bevorzugt als Wälzlageranordnung ausgebildet. Hierbei ist insbesondere an eine zweireihige Kegelrollenlageranordnung gedacht. Diese kann gemäß einer Fortbildung die einzige Lagerung des Rotors sein, wobei die beiden Kegelrollenlager in X-Anordnung angeordnet sind.

Die Lageranordnung kann auch andersartig ausgeführt sein, wobei eine mögliche Lösung auf eine hydrostatische Lagerung abstellt.

Natürlich sind grundsätzlich auch andere Lageranordnungen möglich und denkbar.

Der Vorteil der vorgeschlagenen Lösung besteht zunächst darin, dass kein großer Generator mehr zwingend ist, sondern dass auch eine Anzahl kleinerer Generatoren zum Einsatz kommen kann. Die einzelnen Generatoren können durch Austauschbarkeit schnell gewechselt werden.

Ein weiterer Vorteil besteht darin, dass im Falle dessen, dass eine geringere Windgeschwindigkeit vorliegt, nur ein Teil der Generatoren ans Netz genommen werden kann, so dass auch dann Strom erzeugt werden kann.

Demgemäß zeichnet sich die vorgeschlagene Konzeption durch eine wesentlich erhöhte Flexibilität aus, die auch kostengünstig umgesetzt werden kann.

In der Zeichnung ist ein Ausführungsbeispiel der Erfindung dargestellt. Es zeigen:
- Fig. 1: in perspektivscher Darstellung eine Windkraftanlage und
- Fig. 2: einen Schnitt durch das Innere der Windkraftanlage.

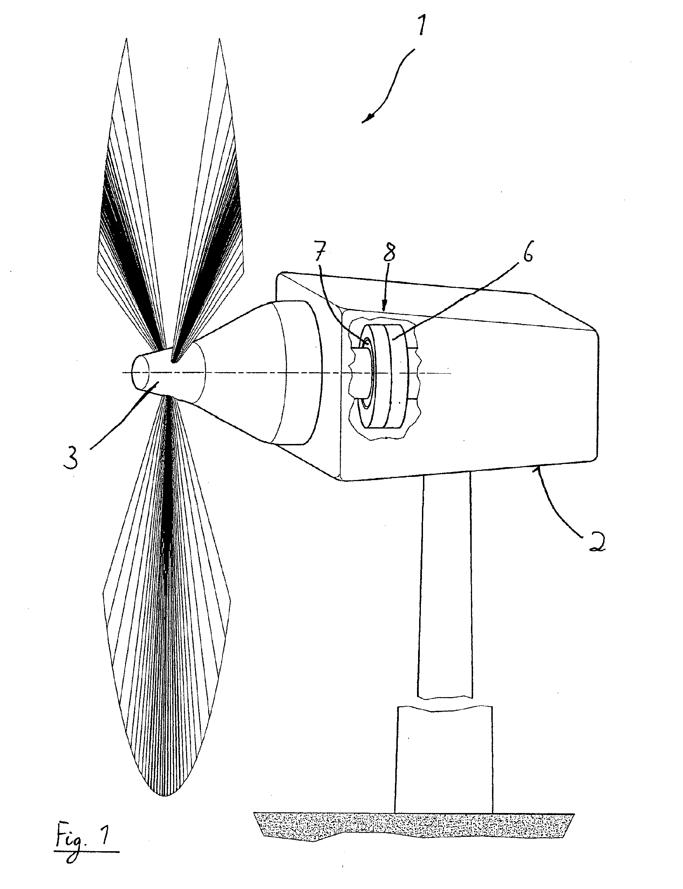

In Fig. 1 ist eine Windkraftanlage 1 dargestellt, die in an sich bekannter Weise aufgebaut ist. Sie weist ein Gehäuse 2 auf, in dem die Lagerung für den (Haupt-)Rotor 3 untergebracht ist; ferner ist hier der in Fig. 1 nicht dargestellte Generator angeordnet. Die Lageranordnung 8 weist generell mindestens einen Lageraußenring 6 und mindestens einen Lagerinnenring 7 auf.

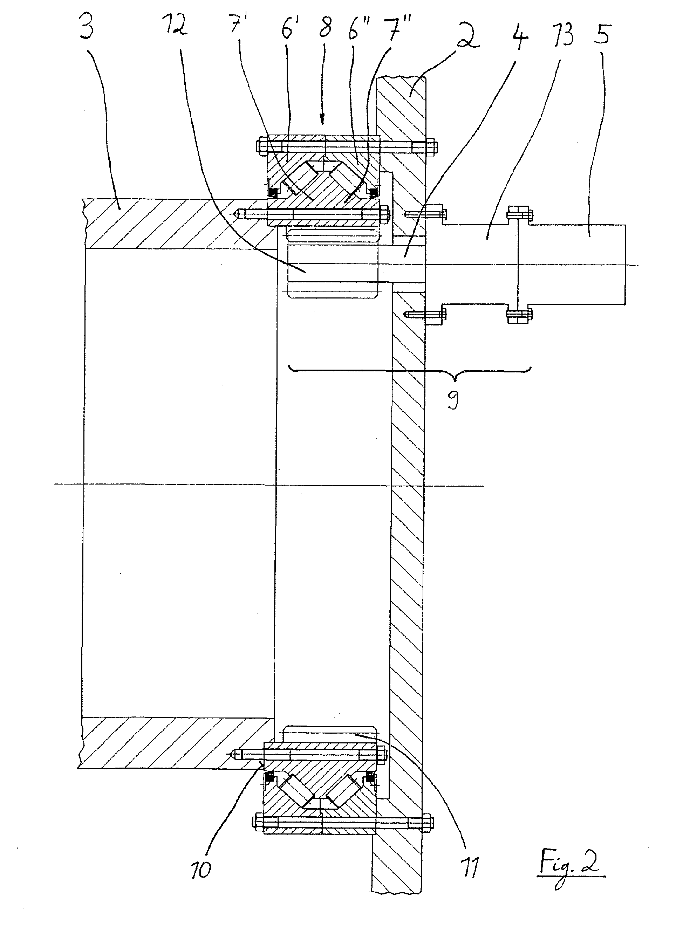

In Fig. 2 sind Details des Aufbaus der Anlage zu sehen. Die Lageranordnung 8 ist hier als Wälzlagerung ausgeführt, und zwar als zweireihige Kegelrollenlager. Demgemäß sind zwei Lageraußenringe 6' und 6" benachbart angeordnet. Kegelrollen stellen die Wälzverbindung zu einem Lagerinnenring 7', 7" her, der im Ausführungsbeispiel als einteiliger Lagerring zwei Laufbahnen aufweist.

Der Rotor 3 der Windkraftanlage 1 ist an einer Stirnseite 10 des Lagerinnenrings 7' direkt angeflanscht, d. h. der Rotor 3 liegt mit einer axialen Endfläche an der Stirnseite 10 des Lagerinnenrings 7' an und ist hier mit Schrauben am Lagerinnenring 7' fixiert. Hierzu weist der Lagerinnenring 7' entsprechende Gewindebohrungen auf.

Weiterhin weist der Lagerinnenring 7', 7" an seiner zylindrischen Innenumfangsfläche eine Verzahnung 11 auf. Mit der Verzahnung 11 kämmen Ritzel 12, von denen mehrere um den Umfang des Lagerinnenrings 7', 7" verteilt angeordnet sind, von denen allerdings nur eines dargestellt ist.

Der Lagerinnenring 7, 7" sowie die Ritzel 12 sind Bestandteil eines Antriebsstrangs 9, mit dem die Drehung des Rotors 3 auf die Generatorwellen 4 der Generatoren 5 übertragen wird, von denen eine der Anzahl der Ritzel 12 entsprechende Anzahl vorhanden ist. Die Ritzel 12 sind direkt oder indirekt - im Ausführungsbeispiel über ein Getriebe 13 - mit den Generatorwellen 4 drehfest verbunden.

Zum Antrieb der Generatorwellen 4 werden die Ritzel 12 mit der Verzahnung 11 in Eingriff gebracht.

Die Elemente Ritzel 12, gegebenenfalls Getriebe 13, Generatorwelle 4 und Generator 5 sind als Einheit ausgebildet. Demgemäß kann eine Einheit als komplettes Modul montiert und dann das Ritzel 12 mit der Verzahnung 11 in Eingriff gebracht werden, um die Einheit zu aktivieren.

Die Lageranordnung 8 kann auch beliebig anders als in Fig. 2 dargestellt ausgeführt sein. Dabei können neben Wälzlagern auch Gleitlager oder - gemäß einer speziellen bevorzugten Ausführungsform - auch hydrostatische Lagerungen verwendet werden.

Weitere Elemente, wie Dichtungen für die Lagerung etc., können in fachmännischer Weise ergänzend vorgesehen werden.

Die Rotorlagerung 8 kann also als Wälz- oder Gleitlagerung für die Aufnahme von Radial- und Axialkräften sowie von Momenten ausgeführt sein. Im Ausführungsbeispiel ist eine zweireihige Kegelrollenlagerung in X-Anordnung vorgesehen. Die Lagerringe sind jeweils angeflanscht und beidseitig abgedichtet. Die Verzahnung 11 ist bevorzugt integrierter Bestandteil des Lagerrings. Dabei kann die Verzahnung 11 aber nicht nur aus dem Material des Lagerrings ausgeformt sein, sondern beispielsweise als separates Bauteil eingepresst, aufgeschrumpft oder angeschraubt und so mit dem Lagerring verbunden sein.

Das Gehäuse 2 ist im Ausführungsbeispiel als (nicht drehende) Rahmenkonstruktion ausgebildet. Wie in Fig. 2 zu sehen ist, die der Generator 5 als am Getriebe 13 angeflanschtes Element ausgebildet, wobei das Getriebe 13 wiederum am Gehäuse 2 angeflanscht ist.

Die Flanschlösung der Lagerringe ist bevorzugt, aber nicht zwingend. Die Lagerringe können auch klassisch auf einer Welle bzw. in einem Gehäuse sitzen.

Sehr vorteilhaft ist die im Ausführungsbeispiel gemäß Fig. 2 vorgesehene Ausgestaltung, wonach das Gehäuse 2 als Rahmenkonstruktion ausgebildet ist, d. h. im Wesentlichen eine Trägerplatte darstellt. Hier ergibt sich in vorteilhafter Weise, dass der Generator 5 samt Getriebe 13 an dem Gehäuse 2 angeflanscht werden kann, genauso wie dies für die Lageranordnung 8 selber gilt. Am Lagerinnenring 7 wiederum kann der Rotor 3 angeflanscht sein. Es ergibt sich somit ein modulares Konzept, das eine relativ einfache Montage erlaubt. Auch der Austausch von Generatoren 5 ist besonders einfach möglich.

### Bezugszeichenliste

- 1: Windkraftanlage
- 2: Gehäuse
- 3: Rotor
- 4: Generatorwelle
- 5: Generator
- 6, 7: Lagerring
- 6, 6', 6": Lageraußenring
- 7, 7', 7": Lagerinnenring
- 8: Lageranordnung
- 9: Antriebsstrang
- 10: Stirnseite
- 11: Verzahnung
- 12: Ritzel
- 13: Getriebe

## Patentansprüche

1. Windkraftanlage (1), umfassend ein Gehäuse (2), einen Rotor (3) und mindestens einen eine Generatorwelle (4) aufweisenden Generator (5), wobei der Rotor (3) relativ zu dem Gehäuse (2) in einer mindestens zwei Lagerringe (6, 6', 6", 7, 7', 7") aufweisenden Lageranordnung (8) gelagert ist und wobei zwischen dem Rotor (3) und dem Generator (5) ein Antriebsstrang (9) angeordnet ist, um die Drehung des Rotors (3) auf die mindestens eine Generatorwelle (4) zu übertragen, wobei der Antriebsstrang (9) den mindestens einen Lagerinnenring (7, 7', 7") der Lageranordnung (8) umfasst, wobei der Rotor (3) an einer Stirnseite (10) des Lagerinnenrings (7, 7', 7") angeflanscht und so mit dem Lagerinnenring (7, 7', 7") drehfest verbunden ist, wobei der Lagerinnenring (7, 7', 7") mit einer am Innenumfang des Lagerinnenrings (7, 7', 7") angeordneten Verzahnung (11) versehen ist, wobei der Antriebsstrang (9) weiterhin mindestens ein Ritzel (12) umfasst, das mit der Verzahnung (11) des Lagerinnenrings (7, 7', 7") in Eingriff steht, wobei das Ritzel (12) direkt oder über ein Getriebe (13) mit der Generatorwelle (4) verbunden ist und wobei das Ritzel (12) radial innerhalb des Lagerinnenrings (7, 7', 7") angeordnet ist und wobei die Verzahnung (11) und das Ritzel (12) eine Stirnverzahnung bilden,
**dadurch gekennzeichnet,**
**dass** das Ritzel (12) samt Generatorwelle (4), gegebenenfalls vorhandenem Getriebe (13) und Generator (5) exzentrisch zur Drehachse des Rotors (3) angeordnet sind.

2. Windkraftanlage nach Anspruch 1, **dadurch gekennzeichnet, dass** der Antriebsstrang (9) mindestens zwei Ritzel (12) aufweist, die jeweils mit der Verzahnung (11) in Eingriff stehen, wobei jedes Ritzel (12) direkt oder über ein Getriebe (13) mit einer Generatorwelle (4) verbunden ist.

3. Windkraftanlage nach Anspruch 2, **dadurch gekennzeichnet, dass** der Antriebsstrang (9) mindestens 3 bis 6 Ritzel (12) aufweist, die jeweils mit der Verzahnung (11) in Eingriff stehen, wobei jedes Ritzel (12) direkt oder über ein Getriebe (13) mit einer Generatorwelle (4) verbunden ist und wobei die Ritzel (12) bevorzugt gleichmäßig um den Umfang des Innenrings (7, 7', 7") verteilt angeordnet sind.

4. Windkraftanlage nach Anspruch 2 oder 3, **dadurch gekennzeichnet, dass** das Ritzel (12) samt direkter oder indirekter Verbindung zur Generatorwelle (4) und der Generator (5) als auswechselbare Einheit ausgebildet sind.

5. Windkraftanlage nach einem der Ansprüche 1 bis 4, **dadurch gekennzeichnet, dass** die Lageranordnung (8) als Wälzlageranordnung ausgebildet ist.

6. Windkraftanlage nach Anspruch 5, **dadurch gekennzeichnet, dass** die Lageranordnung (8) als zweireihige Kegelrollenlageranordnung ausgebildet ist.

7. Windkraftanlage nach Anspruch 6, **dadurch gekennzeichnet, dass** die Lageranordnung (8) die einzige Lagerung des Rotors (3) ist und die beiden Kegelrollenlager in X-Anordnung angeordnet sind.

8. Windkraftanlage nach einem der Ansprüche 1 bis 4, **dadurch gekennzeichnet, dass** die Lageranordnung (8) als hydrostatische Lagerung ausgebildet ist.

## Claims

1. Wind power plant (1), comprising a housing (2), a rotor (3) and at least one generator (5) which has a generator shaft (4), the rotor (3) being mounted relative to the housing (2) in a bearing arrangement (8) which has at least two bearing rings (6, 6', 6", 7, 7', 7"), and a drive train (9) being arranged between the rotor (3) and the generator (5), in order to transmit the rotation of the rotor (3) to the at least one generator shaft (4), the drive train (9) comprising the at least one bearing inner ring (7, 7', 7") of the bearing arrangement (8), the rotor (3) being flange-connected on an end side (10) of the bearing inner ring (7, 7', 7") and thus being connected fixedly to the bearing inner ring (7, 7', 7") so as to rotate with it, the bearing inner ring (7, 7', 7") being provided with a toothing system (11) which is arranged on the inner circumference of the bearing inner ring (7, 7', 7"), the drive train (9) comprising, furthermore, at least one pinion (12) which is in engagement with the toothing system (11) of the bearing inner ring (7, 7', 7"), the pinion (12) being connected directly or via a gear mechanism (13) to the generator shaft (4), and the pinion (12) being arranged radially within the bearing inner ring (7, 7', 7"), and the toothing system (11) and the pinion (12) forming a spur toothing system, **characterized in that** the pinion (12) including the generator shaft (4), the optionally present gear mechanism (13) and the generator (5) are arranged eccentrically with respect to the rotational axis of the rotor (3).

2. Wind power plant according to Claim 1, **characterized in that** the drive train (9) has at least two pinions (12) which are in engagement in each case with the toothing system (11), each pinion (12) being connected directly or via a gear mechanism (13) to a generator shaft (4).

3. Wind power plant according to Claim 2, **characterized in that** the drive train (9) has at least from three to six pinions (12) which are in engagement in each case with the toothing system (11), each pinion (12) being connected directly or via a gear mechanism (13) to a generator shaft (4), and the pinions (12) preferably being arranged such that they are distributed homogeneously around the circumference of the inner ring (7, 7', 7").

4. Wind power plant according to Claim 2 or 3, **characterized in that** the pinion (12) including direct or indirect connection to the generator shaft (4) and the generator (5) are configured as a replaceable unit.

5. Wind power plant according to one of Claims 1 to 4, **characterized in that** the bearing arrangement (8) is configured as an anti-friction bearing arrangement.

6. Wind power plant according to Claim 5, **characterized in that** the bearing arrangement (8) is configured as a two-row tapered roller bearing arrangement.

7. Wind power plant according to Claim 6, **characterized in that** the bearing arrangement (8) is the only bearing of the rotor (3), and the two tapered roller bearings are arranged in an X-arrangement.

8. Wind power plant according to one of Claims 1 to 4, **characterized in that** the bearing arrangement (8) is configured as a hydrostatic bearing.

## Revendications

1. Eolienne (1), comprenant une enceinte (2), un rotor (3) et au moins un générateur (5) présentant un arbre de générateur (4), dans laquelle le rotor (3) est monté par rapport à l'enceinte (2) dans un agencement de palier (8) présentant au moins deux bagues de palier (6, 6', 6", 7, 7', 7") et dans laquelle une chaîne d'entraînement (9) est disposée entre le rotor (3) et le générateur (5), afin de transmettre la rotation du rotor (3) audit au moins un arbre de générateur (4), dans laquelle la chaîne d'entraînement (9) comprend ladite au moins une bague intérieure de palier (7, 7', 7") de l'agencement de palier (8), dans laquelle le rotor (3) est bridé à un côté frontal (10) de la bague intérieure de palier (7, 7', 7") et est ainsi solidaire en rotation de la bague intérieure de palier (7, 7', 7"), dans laquelle la bague intérieure de palier (7, 7', 7") est munie d'une denture (11) disposée sur la périphérie intérieure de la bague intérieure de palier (7, 7', 7"), dans laquelle la chaîne d'entraînement (9) comprend en outre au moins un pignon (12), qui est en prise avec la denture (11) de la bague intérieure de palier (7, 7', 7"), dans laquelle le pignon (12) est relié directement ou par l'intermédiaire d'une transmission (13) à l'arbre de générateur (4), dans laquelle le pignon (12) est disposé radialement à l'intérieur de la bague intérieure de palier (7, 7', 7") et dans laquelle la denture (11) et le pignon (12) forment une denture frontale,
**caractérisée en ce que**
le pignon (12) avec l'arbre de générateur (4), la transmission (13) éventuellement présente et le générateur (5), sont disposés de façon excentrique par rapport à l'axe de rotation du rotor (3).

2. Eolienne selon la revendication 1, **caractérisée en ce que** la chaîne d'entraînement (9) présente au moins deux pignons (12), qui sont respectivement en prise avec la denture (11), dans laquelle chaque pignon (12) est relié directement ou par l'intermédiaire d'une transmission (13) à un arbre de générateur (4).

3. Eolienne selon la revendication 2, **caractérisée en ce que** la chaîne d'entraînement (9) présente au moins 3 à 6 pignons (12), qui sont respectivement en prise avec la denture (11), dans laquelle chaque pignon (12) est relié directement ou par l'intermédiaire d'une transmission (13) à un arbre de générateur (4) et dans laquelle les pignons (12) sont répartis de préférence uniformément sur la périphérie de la bague intérieure (7, 7', 7").

4. Eolienne selon la revendication 2 ou 3, **caractérisée en ce que** le pignon (12) avec sa liaison directe ou indirecte à l'arbre de générateur (4) et le générateur (5) sont configurés en une unité remplaçable.

5. Eolienne selon l'une quelconque des revendications 1 à 4, **caractérisée en ce que** l'agencement de palier (8) est configuré en un agencement de palier à roulement.

6. Eolienne selon la revendication 5, **caractérisée en ce que** l'agencement de palier (8) est configuré en un agencement de palier conique à rouleaux à deux rangées.

7. Eolienne selon la revendication 6, **caractérisée en ce que** l'agencement de palier (8) est l'unique palier du rotor (3) et les deux paliers coniques à rouleaux sont disposés en un agencement en X.

8. Eolienne selon l'une quelconque des revendications 1 à 4, **caractérisée en ce que** l'agencement de palier (8) est configuré en un palier hydrostatique.
